# EUROPEAN PATENT APPLICATION

(11) **EP 3 263 930 A1**
(43) Date of publication of application: **03.01.2018**
(21) Application number: 16755742.0
(22) Date of filing: 26.02.2016
(51) Int. Cl.: F16C 33/08, F16C 9/02, F16C 17/02, F16C 33/10

(54) **SLIDE BEARING**

(30) Priority: 27.02.2015 JP 2015039115
(71) Applicant: TAIHO KOGYO Co., Ltd., Toyota-shi, Aichi 471-8502 (JP)
(72) Inventor: SEKI Daisuke, Toyota-shi Aichi 471-8502 (JP); TAKAGI Yuji, Toyota-shi Aichi 471-8502 (JP)
(74) Representative: Kuhnen & Wacker
(86) International application number: PCT/JP2016/055953
(87) International publication number: WO 2016/136998

(57) **Abstract**

The present invention relates to a slide bearing (1) in which half members (2, 2) obtained by bisecting a cylinder in parallel to the axial direction are arranged vertically, wherein: in an axial-direction end section of the lower half member (2), a narrow groove (3) is provided along the circumferential direction on the downstream side in the rotating direction; a circumferential edge section (2a) formed so as to be lower than the surface that abuts against a crankshaft (11) is provided on the outer side of the narrow groove 3 in the axial direction; and in a cross-sectional view orthogonal to the length direction of the narrow groove (3), the bottom surface (3a) of the narrow groove (3) is formed in a curved manner. Thus, the present invention can achieve a friction-reducing effect and also suppress the total amount of effluent oil.

## Description

### Technical Field

The present invention relates to a technique of a sliding bearing, and can be applied to a sliding bearing including half members, obtained by splitting a cylinder in half in a direction parallel with an axial direction, arranged in an upper and lower direction.

### Background Art

Conventionally known sliding bearings, for supporting a crankshaft of an engine, having a split structure in which two members obtained by splitting a cylindrical member in half are combined are plagued by a large friction due to high viscosity of oil during a cold engine operation. Thus, one known bearing has relief portions (narrow grooves) formed over the entire circumference in both ends of the bearing in an axial direction (for example, see Patent Literature 1).

### Citation List

### Patent Literature

PTL 1: Japanese Translation of PCT International Application Publication No. JP-T-2003-532036

### Summary of Invention

### Technical Problem

Such a conventional bearing in which the narrow grooves are formed fails to achieve both a larger quantity of lead-in oil and a smaller quantity of outflow oil flowing through both ends in the axial direction. Thus, a further friction reducing effect has been unable to be expected.

Thus, the present invention is made in view of the problem described above, and provides a sliding bearing that can achieve a smaller total quantity of outflow oil as well as a further friction reducing effect.

### Solution to Problem

The problem of the present invention is as described above. Next, a solution of the problem is described.

The present invention is a sliding bearing including half members, obtained by splitting a cylinder in half in a direction parallel with an axial direction, arranged in an upper and lower direction. A narrow groove extending in the circumference direction is formed on an axial direction end of one of the half members on a lower side, on a downstream side in a rotation direction. A circumference edge portion is formed on an outer side of the narrow groove in an axial direction, and is formed to be lower than a contact surface of the sliding bearing to be in contact with a shaft.

Projecting portions and recessed portions are alternately arranged on a bottom surface of the narrow groove in a cross-sectional view in parallel with a longitudinal direction of the narrow groove.

In the present invention, the recessed portions may each be formed to have an arch shape in the cross-sectional view in parallel with the longitudinal direction. Advantageous Effects of Invention

The present invention provides the following advantageous effects.

The narrow groove is provided without hindering generation of oil film pressure, whereby a friction reducing effect can be achieved with a smaller sliding area and the total quantity of outflow oil can be reduced. With the projecting portions and the recessed portions alternately arranged on the bottom surface of the narrow groove, the lubricant oil is smoothly guided to the inner circumference surface of the half member. Thus, the quantity of sucked back oil can be increased, whereby a friction reducing effect can be obtained and the total quantity of the outflow oil can be reduced.

### Brief Description of Drawings

[Fig. 1] Fig. 1 is a front view of a sliding bearing according to an embodiment of the present invention.
[Fig. 2] Fig. 2(A) is a plan view of a half member as part of the sliding bearing according to the embodiment of the present invention, Fig. 2(B) is a cross-sectional view of the same taken along line II(B)-II(B), and Fig. 2(C) is a cross-sectional view of the same taken along line II(C)-II(C).
[Fig. 3] Fig. 3(A) is an enlarged cross-sectional view of a narrow groove according to the embodiment of the present invention taken along line II(B)-II(B), and Fig. 3(B) is a partial cross-sectional perspective view of the narrow groove.
[Fig. 4] Fig. 4 is an enlarged cross-sectional view of the narrow groove and a blade according to the embodiment of the present invention taken along line II(B)-II(B).
[Fig. 5] Fig. 5 is a cross-sectional view of a half member according to another embodiment of the present invention taken along line II(C)-II(C).

### Description of Embodiments

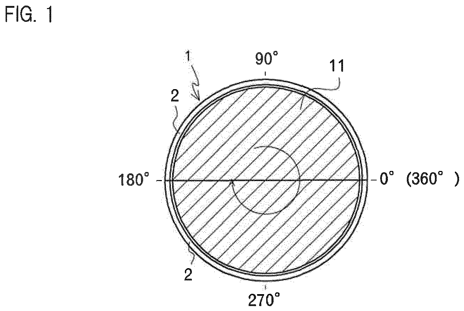

An embodiment of the invention is described below. Fig. 1 is a front view of a sliding bearing 1, with a vertical direction of the sheet defined as an upper and lower direction, and a direction between a closer side and a farther side of the sheet defined as an axial direction (front and rear direction).

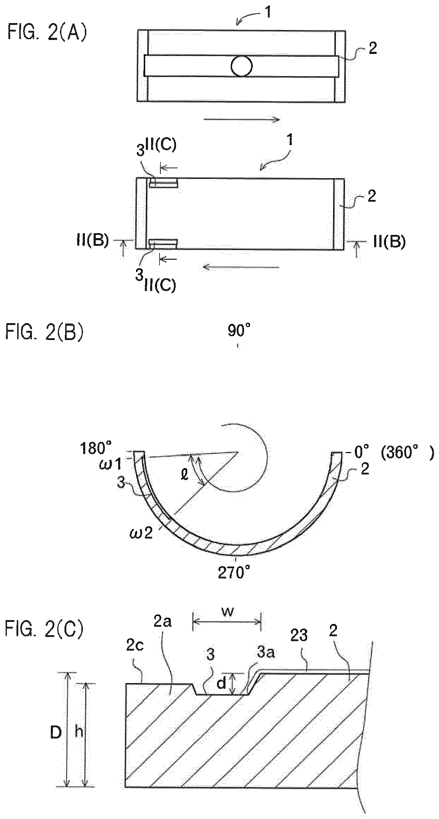

First of all, half members 2 as parts of the sliding bearing 1 according to an embodiment of the present invention are described with reference to Fig. 1 and Fig. 2.

The sliding bearing 1 is a cylindrical member, and is applied to a sliding bearing structure of a crankshaft 11 of an engine as illustrated in Fig. 1. The sliding bearing 1 includes two half members 2 and 2. The two half members 2 and 2 have shapes obtained by splitting a cylinder in half in a direction parallel with the axial direction, and each have a semicircular cross-sectional shape. In the present embodiment, the half members 2 and 2 are arranged in the upper and lower direction with joining surfaces provided on left and right sides. When the sliding bearing 1 is supporting the crankshaft 11, a predetermined gap is formed, and lubricant oil is supplied into the gap through an unillustrated oil path.

Fig. 2(a) illustrates the half members 2 on the upper and the lower sides. In the present embodiment, a rotation direction of the crankshaft 11 corresponds to the clockwise direction in front view as indicated by an arrow in Fig. 1. A bearing angle ω is 0° at a right end position in Fig. 2(B), and increases along the counterclockwise direction in Fig. 2(B). More specifically, the bearing angle ω in Fig. 2(B) is defined as 180° at a left end position, and as 270° at a lower end position.

The upper half member 2 has an inner circumference provided with a groove extending along a circumference direction and provided with a circular hole at the center. The joining surfaces are provided on the left and right sides of the upper half member 2. As illustrated in Fig. 2(C), the half members 2 each include a coating layer 23.

The lower half member 2 has an inner circumference with ends in the axial direction provided with narrow grooves 3.

A circumference edge portion 2a is formed on a surface on the outer side of each of the narrow grooves 3 in the axial direction, and is formed to have a height h from an outer circumference surface of the half member 2 that is shorter than a height D of a contact surface from an outer circumference surface of the half member 2. Thus, the circumference edge portion 2a on the outer side in the axial direction is formed to be one step lower than the contact surface, adjacent to the circumference edge portion 2a, to be in contact with the crankshaft 11.

The narrow groove 3 is described with reference to Fig. 2(B) and Fig. 2(C).

The narrow grooves 3 are provided on the lower half member 2. In the present embodiment, two narrow grooves 3 are arranged in parallel in the axial direction. More specifically, the narrow groove 3 extends along the circumference direction to a bearing angle ω2 in a direction in which the bearing angle ω increases (counterclockwise direction) from a position (with the bearing angle ω of ω1) separated from the joining surface (with the bearing angle ω of 180°) on a downstream side in a rotation direction of the crankshaft 11. The lower half member 2 has a joining surface on the right side in Fig. 2(B) as a joining surface on an upstream side in the rotation direction, and a joining surface on the left side in Fig. 2(B) as the joining surface on the downstream side in the rotation direction.

The narrow groove 3 is formed to have a width w as illustrated in Fig. 2(C).

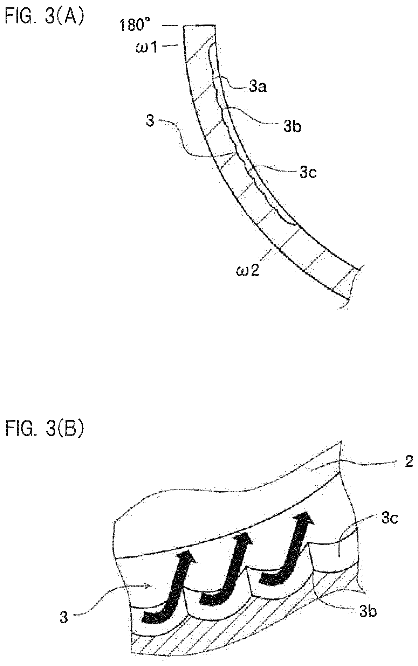

The narrow groove 3 is also formed to have a depth d shorter than the height D of the contact surface from the outer circumference surface of the half member 2. The depth d of the narrow groove 3 changes along a longitudinal direction from one end toward the other end of the narrow groove 3, as illustrated in Fig. 3(A).

As illustrated in Fig. 3(A) as a cross-sectional view taken along line II(B)-II(B) in parallel with the longitudinal direction, projecting portions 3b and recessed portions 3c are alternately arranged on a bottom surface 3a of the narrow groove 3.

The projecting portions 3b are each provided between two adjacent recessed portions 3c and 3c. Each projecting portion 3b is formed to protrude toward an inner circumference side beyond the recessed portions 3c.

The recessed portions 3c each have an arch shape in the cross-sectional view taken along line II(B)-II(B). One recessed portion 3c having an arch shape has an end continuing to an end of an adjacent recessed portion 3c having the arch shape, and the projecting portion 3b is formed as a portion where the recessed portion 3c and the recessed portion 3c are connected to each other.

With the projecting portions 3b and the recessed portions 3c alternately arranged on the bottom surface 3a of the narrow groove 3, a flow of sucked back lubricant oil as indicated by arrows in Fig. 3(B) can be achieved. Thus, flow of the lubricant oil, flowed into the narrow groove 3, toward the inner side of the half member 2 in the axial direction by flowing over the side surface of the narrow groove 3 is facilitated. More specifically, the lubricant oil moving along the projecting portion 3b from the recessed portion 3a creates a flow toward the inner circumference surface side of the half member 2, so as to be capable of more easily flowing over the side surface of the narrow groove 3.

With this configuration, the quantity of sucked back lubricant oil can be increased, and the total quantity of the outflow oil can be reduced.

With the circumference edge portion 2a formed one step above a bottom surface 3a of the narrow groove 3, a wall for preventing oil from leaking from a sliding surface to the axial direction end and preventing sucked back oil from leaking again can be provided, whereby a quantity of outflow oil can be reduced. Thus, the quantity of the sucked back oil can be increased during a cold engine operation, and a higher friction reducing effect can be achieved with quick heating.

With the circumference edge portion 2a formed to be one step lower than the contact surface, adjacent to the circumference edge portion 2a, to be in contact with the crankshaft 11, the circumference edge portion 2a is less likely to be in contact with the crankshaft 11 I inclined to be in a state of being in contact with one end in the axial direction only (partial contact state), and thus can be prevented from being damaged.

With the narrow grooves 3 according to the present embodiment, a smaller FMEP is achieved. An especially smaller FMEP is achieved in a region with a low engine speed. The FMEP is a value indicating friction characteristics. Smaller FMEP leads to a lower friction. For example, at the timing of engine cold start, FMEP is reduced and the friction is reduced.

Next, a method for forming the narrow groove 3 is described.

For example, the narrow groove 3 is formed by cutting.

In the cutting, the inner circumference surface of the half member 2 is cut with a blade. In the present embodiment, a circular saw 100 is used as the blade.

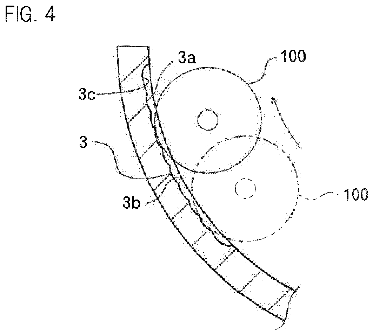

More specifically, the inner circumference surface of the half member 2 is cut with the circular saw 100 moving in parallel with the longitudinal direction of the narrow groove 3 as illustrated in Fig. 4.

With the circular saw 100 moving in the manner described above, the recessed portions 3c with an arch shape corresponding to an outer circumference (arch shape) of the circular saw 100 are formed on the bottom surface 3a of the narrow groove 3, and the projecting portions 3b are each formed between adjacent recessed portions 3c and 3c.

The coating layer 23 is coated on the inner circumference surface of the half member 2 to be formed. As illustrated in Fig. 2(C), the coating layer 23 is formed to cover an axial direction inner-side end of the narrow groove 3. More specifically, the coating layer 23 is formed to an intermediate portion of an axial direction inner-side surface of the narrow groove 3. With this configuration, the coating layer 23 covering the axial direction inner-side end of the narrow groove 3 can reduce a friction between the inner-side end of the narrow groove 3 in the axial direction and the crankshaft 11 inclined to be in a state of being in contact with one end in the axial direction only (partial contact state).

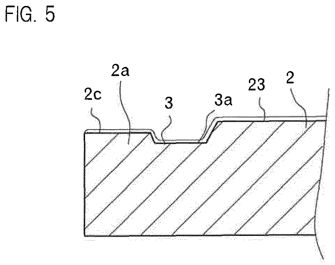

As illustrated in Fig. 5, the coating layer 23 may cover the entire narrow groove 3. With this configuration, a friction between the crankshaft 11 inclined to be in a state of being in contact with one end in the axial direction only (partial contact state) and the axial direction inner-side end and an axial direction outer-side end of the narrow groove 3 can be reduced.

As described above, the sliding bearing 1 includes half members 2 and 2, obtained by splitting a cylinder in half in a direction parallel with an axial direction, arranged on upper and lower sides. The narrow groove 3 extending in the circumference direction is formed on an axial direction end of one of the half members 2 on a lower side, on a downstream side in a rotation direction. The circumference edge portion 2a is formed on an outer side of the narrow groove 3 in the axial direction, and is formed to be lower than the contact surface of the sliding bearing 1 to be in contact with the crankshaft 11. The projecting portions 3b and the recessed portions 3c are alternately arranged on the bottom surface 3a of the narrow groove 3 in a cross-sectional view in parallel with the longitudinal direction of the narrow groove 3.

With the configuration described above, the narrow groove 3 is provided without hindering generation of oil film pressure, whereby a friction reducing effect can be achieved with a smaller sliding area and the total quantity of outflow oil can be reduced. With the projecting portions 3b and the recessed portions 3c alternately arranged on the bottom surface 3a of the narrow groove 3, the lubricant oil is smoothly guided to the inner circumference surface of the half member 2. Thus, the quantity of sucked back oil can be increased, whereby a friction reducing effect can be obtained and the total quantity of the outflow oil can be reduced.

The recessed portions 3c are each formed to have an arch shape in the cross-sectional view in parallel with the longitudinal direction (cross-sectional view taken along line II(B)-II(B)).

With the configuration described above, the lubricant oil can be easily guided toward the inner circumference surface of the half member 2 while moving along the recessed portions 3c on the bottom surface 3a of the narrow groove 3, whereby the lubricant oil can be smoothly sent toward the inner side in the axial direction.

### Reference Signs List

- 1: Sliding bearing
- 2: Half member
- 2a: Circumference edge portion
- 3: Narrow groove
- 3a: Bottom surface
- 3b: Projecting portion
- 3c: Recessed portion
- 11: Crankshaft

## Claims

1. A sliding bearing comprises half members, obtained by splitting a cylinder in half in a direction parallel with an axial direction, arranged in an upper and lower direction, wherein
a narrow groove extending in the circumference direction is formed on an axial direction end of one of the half members on a lower side, on a downstream side in a rotation direction,
a circumference edge portion is formed on an outer side of the narrow groove in an axial direction, and is formed to be lower than a contact surface of the sliding bearing to be in contact with a shaft, and
projecting portions and recessed portions are alternately arranged on a bottom surface of the narrow groove in a cross-sectional view in parallel with a longitudinal direction of the narrow groove.

2. The sliding bearing according to claim 1, wherein the recessed portions are each formed to have an arch shape in the cross-sectional view in parallel with the longitudinal direction.
